# EUROPEAN PATENT SPECIFICATION

(11) **EP 2 845 874 B1**
(45) Date of publication and mention of the grant of the patent: **22.03.2017**
(21) Application number: 13845708.0
(22) Date of filing: 12.09.2013
(51) Int. Cl.: C08J 3/03, C08J 3/00, C08L 1/02, D21C 5/00, D21C 9/00

(54) **METHOD FOR DISSOLVING CELLULOSE**
VERFAHREN ZUR CELLULOSEAUFLÖSUNG
PROCÉDÉ DE DISSOLUTION DE CELLULOSE

(30) Priority: 10.10.2012 CN 201210380753
(43) Date of publication of application: 11.03.2015
(73) Proprietor: Hubei Tiansi Technology Company Limited, Hubei 432100 (CN)
(72) Inventor: TANG, Lian, Xiaogan Hubei 432100 (CN); ZHOU, Jinping, Xiaogan Hubei 432100 (CN); WANG, Yunbo, Xiaogan Hubei 432100 (CN); LI, Daoxi, Xiaogan Hubei 432100 (CN); LI, Yaming, Xiaogan Hubei 432100 (CN); ZHENG, Zhiqiang, Xiaogan Hubei 432100 (CN)
(74) Representative: Laufhütte, Dieter
(86) International application number: PCT/CN2013/083373
(87) International publication number: WO 2014/056383

(56) References cited:
- CN-A- 1 948 369
- CN-A- 102 037 019
- CN-A- 102 875 821
- GB-A- 1 144 048
- US-A- 4 302 252

## Description

The disclosure herein relates to a method of dissolving cellulose.

Cellulose is a renewable resource that widely exists in the nature. Due to its unique reactional properties and molecular characteristics, the cellulose can be expected to become one of the main chemical resources in the future. Currently, cellulose is closely related to textiles, light industry, chemical industry, defense, oil, medicine, biotechnology, environmental protection and energy, etc., and is widely used for producing cellulosic materials such as paper, fiber membranes, polymers and coatings, etc. However, the molecule of the natural cellulose has a relatively high crystallinity and a large number of hydrogen bonds between and within the molecules, making it difficult to dissolve, melt and process. For a long time, in the cellulose fiber regeneration field of the textile industry, viscose fibers have been playing a major role. A viscose process can produce ideal regenerated cellulose fibers, but the production process is complicated and difficult to control, and the required working space and utility consumption can be huge. A large number of toxic gases and waste water may be produced, causing serious pollution. This process is therefore being faced out. Currently, new no-toxic and harmless solvents and methods of dissolving cellulose have become an important development direction in the cellulose industry.

Cellulose solvents can be divided into non-derivatized solvents and derivatized solvents. A cellulose solvent is a derivatized solvent (CS₂/NaOH/H₂O, N₂O₄/dimethylformamide, etc.), if a derivative reaction occurs during the dissolving process of the cellulose. A cellulose solvent is a non-derivatized solvent (amine oxide system, LiOH/dimethylacetamide, ionic liquid, NaOH/urea, etc.),if no derivative is formed during the dissolving process. Since dissolving cellulose by a non-derivatized solvent is a physical process, the dissolving process does not impact the chemical structure of the cellulose easily, and the process for producing cellulose products is relatively simple.

In the development history of the cellulose products, a lot of researches have been focused on non-derivatized solvents. In 1939, US Patent No. 2179181 reported that tertiary amine oxides such as trimethyl amine oxide, triethyl amine oxide and dimethyl cyclohexyl amine oxide, etc. can dissolve cellulose. Later, British Patent No. 1144048 further reported that NMMO (4-methylmorpholine-N-oxide, N-methylmorpholine aqueous solution and methylmorpholine oxide, or chemical C₅H₁₁NO₂) can be more suitable as a cellulose solvent. Dissolving cellulose by NMMO simplifies the process and reduces the amount of chemical raw materials used and energy consumption. The production process involves only physical changes, and the solvent NMMO used is non-toxic and environment-friendly. The obtained fiber product is called Lyocell ("Tencel" in China). However, the related issues may include the relatively high price of the solvent, stringent dissolving conditions, and complex recycling system. Patent US4302252 provided that LiCL/DMAc (dimethylacetamide) system can form a solvate with cellulose, facilitating cellulose dissolving and has a good solubility and solubility. However, the system has a narrow dissolving time and is expensive. Also, DMAc is strongly irritating and has some toxicity. Celanese Company provided in GB patent 263810 that cellulose can be dissolved in a phosphoric acid system. The system is a complex solution of phosphoric acid and polyphosphoric acid. In the cellulose dissolving process, a temperature should be strictly controlled. In addition, to improve the solubility of the system, amass fraction of P₂O₅ must also be increased. The dissolving time can also be relatively long, limiting the industrial adoption. In 1934, Graenacher found that melted N-ethyl pyridine chloride can dissolve cellulose. However, melted N-ethyl pyridine has a relatively melting point and was not used industrially. In 2002, Swatloskiet al. found that cellulose can be dissolved directly in a room temperature ionic liquid without being activated. In the same year, it is reported the ionic liquid 1-butyl -3-methylimidazolium chloride can be used as a cellulose solvent. In 2003, Qiang Ren et al. synthesized a new room temperature ionic liquid 1- allyl-3-methylimidazolium chloride that also has a capability of dissolving cellulose. In 2005, Huimou Luo et al. synthesized chloride 1-(2-hydroxyethyl)-3-methylimidazolium ionic liquid, and found that the solubility of microcrystalline cellulose in the ionic liquid reaches 5%-7% when activated by a temperature of 70°C. However, this liquid begins to decompose when the temperature exceeds 80°C, thereby having no practical value. Patent No. JP1777283 disclosed dissolving cellulose in 2.5mol /L NaOH aqueous solution. However, the cellulose can only be wood pulp cellulose that is treated by steam explosion, and the degree of polymerization of the wood pulp cellulose is less than 250.The wood pulp cellulose dissolves in the NaOH aqueous solution at a temperature of about 4°C. However, the fiber and membrane made by this method has a very low strength, and therefore is not suitable for industrial production. Literature «Zhejiang Chemical Industries» 1006-4184 (2007) 12-0001-03 disclosed using sulfite wood pulp board as the raw material and sodium hydroxide solution as the solvent to study cellulose dissolving in alkali. The viscosity of the mixture with a concentration of about 6wt% is studied at a temperature of 2°C. However, the dissolving behavior under a lower temperature has not been studied, and the solubility and the stability of the solution have not been discussed in detail either, resulting in few practical values. In patents No.CN00114486.3, CN00114485.5, CN03128386.1, CN200310111566.3, CN200410013389.X and WO 2006/128346A1 owned by Wuhan University disclosed using aqueous solutions of sodium hydroxide and urea, and aqueous solutions of sodium hydroxide and thiourea to directly dissolve natural cellulose under a low temperature condition. The solution can remain stable in a temperature range of 0-5°C for a long term. Using such a solvent system can help obtain fibers and membranes in a laboratory. However, the properties of the cellulose solution in the system can be greatly affected by the temperature, therefore, the system has not been used industrialized.

Cellulose non-derivatized solvent would not produce chemical changes to cellulose during the production process. The process is simple and has been developed extensively. However, before using a general non-derivatized solvent to dissolve cellulose, the cellulose needs to be activated. The simplicity of the activation process, the environmental friendliness of the solvent, the stability of the obtained cellulose solution and the economy of the raw material can all limit the industrialization process.

### Summary

The purpose of the disclosure herein is to provide a method of dissolving cellulose. The method includes: activating cellulose by heating the cellulose in a heating apparatus, and then dissolving the cellulose in a solvent. The solvent dissolves the cellulose by a freezing-unfreezing process to obtain a cellulose solution with a relatively high concentration and stability. The obtained cellulose solution can be used in making other cellulose products, such as fibers, membranes and sponges, etc..

To achieve the above purpose, in one embodiment, the technical solution discloses a method of dissolving cellulose, wherein the cellulose is activated by heating the cellulose in a heating apparatus, and then the cellulose is dissolved in a solvent.

When activating the cellulose by heat, the heating temperature is 130-270°C, and the heating time is 0.1-100 hours.

In one embodiment, the solvent is an aqueous solution including 6wt%-12wt%of sodium hydroxide and 0.1wt%-6wt%of zinc oxide.

Preferably, the solvent used for dissolving the cellulose is an aqueous solution including 7.0wt%~9.0wt%of sodium hydroxide and 0.5wt%~2.0wt% of zinc oxide.

In one embodiment, the dissolving of cellulose by the solvent includes the following steps:
1) Activating the cellulose by heating, where the cellulose has a polymerization degree of DP=300~700, dispersing the activated cellulose by heat in the solvent, and freezing at a freezing temperatureof-10~-30°C for a freeing time of 0.1~50 hours:
2) Unfreezing the frozen material obtained in step 1) under a temperature of no more than 32°C, where the unfreezing is performed in standing still or with stirring, so as to dissolve and obtain a cellulose solution with a concentration of 3wt%-12wt%.

The method of dissolving cellulose, preferably,
In step 1), the freezing temperature is -12~-18°C, the freezing time period is 0.1~50 hours and the range of the degree of polymerization (DP)of the cellulose is 350~550.
In step 2), the unfreezing temperature is 10~22°C, and the concentration of the cellulose solution obtained by dissolving is 5.0wt%~8.5wt%.

The cellulose solution obtained according to the present disclosure has a relatively good solubility and a relatively high stability, and can remain stable for several days at a temperature of -8~32°C The cellulose solution can be used for production of fibers, membranes or sponges, and is especially suitable for industrial production.

As compared to the traditional methods, the embodiments in the current disclosure have at least the following advantages:
1) Good solubility of the cellulose solution, the cellulose solution generally does not have colloidal particles with a diameter larger than 5 µm. Good stability, the cellulose solution does not change significantly after standing at the room temperature for 24~120 hours. The concentration of the solution is relatively high, and the concentration of the solution according to the embodiments in the present disclosure can reach 3wt%-12wt%, which is close to the cellulose concentration in the current viscose production method, and is suitable for industrial production.
2) The activating and dissolving processes are simple and easy to operate. During the dissolving process, only the freezing process requires low temperature environment, other processes can be carried out at room temperature. These help overcome the disadvantages of complexity and stringent conditions of the traditional methods.
3) The activating apparatus is simple and easy to implement. The solvent is easy to prepare. The components of the solvent can only include NaOH, zinc oxide and water. The components are cheap and very economic. Because the components of the solvent are simple, the solvent is easy to recycle in the cellulose production process, the recycling cost is also low and the recycled materials can be repeatedly used, which are advantageous for industrial scale production.

The details of one or more embodiments of the disclosure are set forth in the accompanying drawings and the description below. Other features, objects, and advantages of the disclosure will be apparent from the description and drawings, and from the claims.

### Brief Description of the Drawings

Fig. 1 illustrates a microscopic morphology of the cellulose solution made according to embodiment 1.
Fig. 2 illustrates a microscopic morphology of the cellulose solution made according to embodiment 2.
Fig. 3 illustrates a microscopic morphology of the cellulose solution made according to embodiment 3.
Fig. 4 illustrates a microscopic morphology of the cellulose solution made according to embodiment 4.
Fig. 5 illustrates a microscopic morphology of the cellulose solution made according to embodiment 5.
Fig. 6 illustrates a microscopic morphology of the cellulose solution made according to embodiment 6.
Fig. 7 illustrates a graph of the stability of the cellulose solutions according to embodiments 1 to 6 over time.

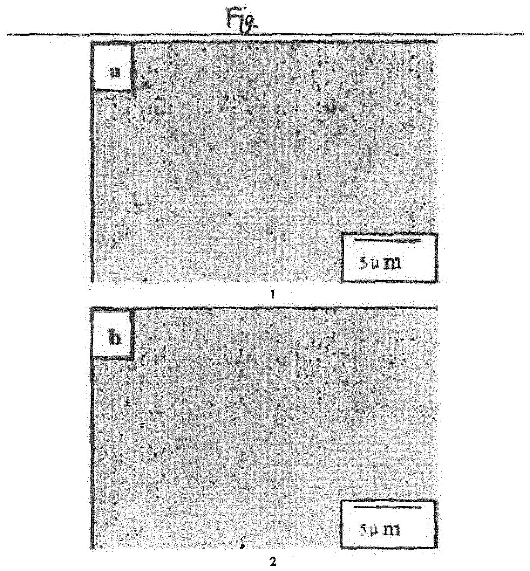

Note: Figs. 1 to 6 are 100X magnified photos by a fiber projectorCYG-055DI.

### Detailed Description

To better understand the present disclosure, the following embodiments further explain the present disclosure in detail. It should be appreciated that the present disclosure is not limited by the following embodiments.

### Embodiment 1

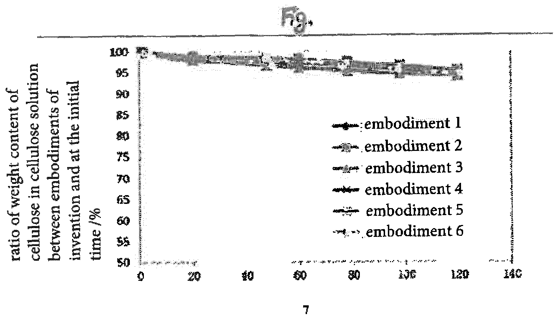

Weigh a certain mass of cotton pulp cellulose, where a degree of polymerization of the cotton pulp cellulose is 350, place into an oven and heat for 3 hours at a temperature of 138°C, take out and set aside. Using water as a solvent, prepare an aqueous cellulose solvent including sodium hydroxide at a mass concentration of 12% and zinc oxide at a mass concentration of 5%. Weigh the heated and activated cellulose and add the cellulose into the prepared cellulose solvent, so that a mass concentration of the cellulose is 8.5%, stir well to submerge all the cellulose below the liquid surface. Then put the mixture in a cold storage with a temperature of -15°C, freeze for 5 hours, take out and stand at room temperature for unfreezing, where the room temperature is 22°C. When the temperature of the mixture is raised to 22°C, stir by a glass rod to obtain a transparent cellulose solution. Take out a small amount of the cellulose solution, place onto a fiber projectorCYG-055DI, observe and photograph by magnifying 100 times. A microscopic photo of the cellulose solution is shown in Fig.1. The cellulose is dissolved completely and a diameter of the colloidal particle is less than 5 µm. Store the solution under the room temperature of 22°C for 100 hours. At different time points, liquid from an upper level of the solution is taken and dried to weigh a solid content of the cellulose. A comparison to the solid content of the cellulose solution at the initial time point of 0 hour is shown in Fig. 7. After 100 hours, the settled content is 5.5wt% and a weight ratio of the non-settled content is 94.5wt%. The solubility and stability of the cellulose solution is good.

### Embodiment 2

Weigh a certain mass of cotton pulp cellulose, where a degree of polymerization of the cotton pulp is 550, place into an oven and heat for 0.3 hour at a temperature of 230°C, take out and set aside. Using water as a solvent, prepare an aqueous cellulose solvent including sodium hydroxideat a mass concentration of 7% and zinc oxide with a mass concentration of 1.0%. Weigh the heated and activated cellulose and add the cellulose into the prepared cellulose solvent, so that a mass concentration of the cellulose is 4.5%, stir well to submerge all the cellulose below the liquid surface. Then put the mixture in a cold storage with a temperature of -13°C, freeze for 12 hours, take out and stand at room temperature for unfreezing, wherein the room temperature is 23°C. When the temperature of the mixture is raised to 23°C, stir by a glass rod to obtain a transparent cellulose solution. Take out a small amount of the cellulose solution, place to a fiber projectorCYG-055DI, observe and photograph by magnifying 100 times. A microscopic photo of the cellulose solution is shown in Fig.2. The cellulose is dissolved completely and a diameter of the colloidal particle is less than 5 µm. Store the solution under the room temperature of 23°C for 120 hours. At different time points, liquid from an upper level of the solution is taken and dried to weigh a solid content of the cellulose. A comparison to the solid content of the cellulose solution at the initial time point of 0 hour is shown in Fig. 7. After 120 hours, the settled content is 4.8wt% and a weight ratio of the non-settled content is 95.2wt%.

### Embodiment 3

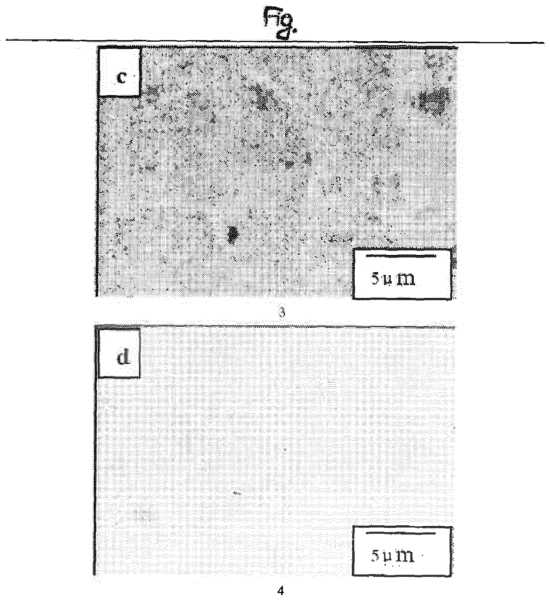

Weigh a certain mass of cotton pulp cellulose, where a degree of polymerization of the cotton pulp cellulose is 380, place into an oven and heat for 0.8 hour at a temperature of 190°C, take out and set aside. Using water as a solvent, prepare an aqueous cellulose solvent including sodium hydroxide at a mass concentration of 6% and zinc oxide at a mass concentration of 0.5%. Weigh the heated and activated cellulose and add the cellulose into the prepared cellulose solvent, so that a mass concentration of the cellulose is 5%, stir well to submerge all the cellulose below the liquid surface. Then put the mixture in a cold storage with a temperature of -16°C, freeze for 1 hour, take out and stir at a speed of 150r/min under room temperature for unfreezing, where the room temperature is 22°C. When the temperature of the mixture is raised to 22°C, stir by a glass rod to obtain a transparent cellulose solution. Take out a small amount of the cellulose solution, place onto a fiber projectorCYG-055DI, observe and photograph by magnifying 100 times. A microscopic photo of the cellulose solution is shown in Fig.3. The cellulose is dissolved completely and a diameter of the colloidal particle is less than 5 µm. Store the solution under the room temperature of 22°C for 120 hours. At different time points, liquid from an upper level of the solution is taken and dried to weigh a solid content of the cellulose. A comparison to the solid content of the cellulose solution at the initial time point of 0 hour is shown in Fig. 7. After 120 hours, the settled content is 5.9wt% and a weight ratio of the non-settled content is 94.1wt%.

### Embodiment 4

Weigh a certain mass of cotton pulp cellulose, where a degree of polymerization of the cotton pulp is 450, place into an oven and heat for 1 hour under a temperature of 175°C, take out and set aside. Using water as a solvent, prepare an aqueous cellulose solvent including sodium hydroxide with a mass concentration of 10% and zinc oxide with a mass concentration of 1.5%. Weigh the heated and activated cellulose and add the cellulose into the prepared cellulose solvent, so that a mass concentration of the cellulose is 7.0%, stir well to submerge all the cellulose below the liquid surface. Then put the mixture in a cold storage with a temperature of -25°C, freeze for 10 hours, take out and stand at room temperature for unfreezing, wherein the room temperature is 24°C. When the temperature of the mixture is raised to 24°C, stir by a glass rod to obtain a transparent cellulose solution. Take out a small amount of the cellulose solution, place to a fiber projectorCYG-055DI, observe and photograph by magnifying 100 times. A microscopic photo of the cellulose solution is shown in Fig.4. The cellulose is dissolved completely and a diameter of the colloidal particle is less than 5 µm. Store the solution under the room temperature of 24°C for 120 hours. At different time points, liquid from an upper level of the solution is taken and dried to weigh a solid content of the cellulose. A comparison to the solid content of the cellulose solution at the initial time point of 0 hour is shown in Fig. 7. After 120 hours, the settled content is 4.7wt% and a weight ratio of the non-settled content is 95.3wt%.

### Embodiment 5

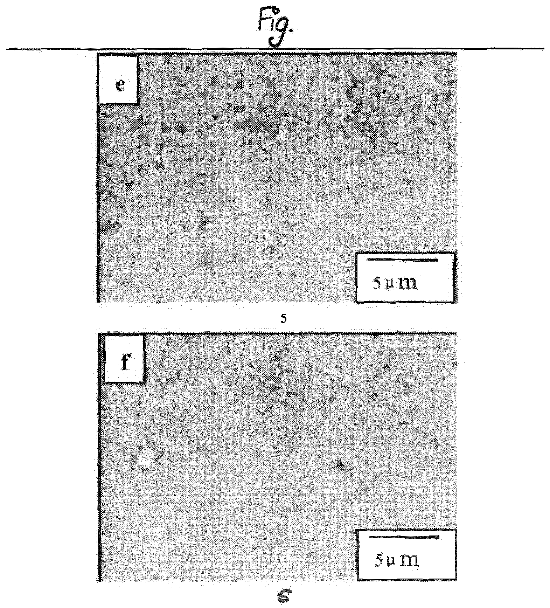

Weigh a certain mass of cotton pulp cellulose, where a degree of polymerization of the cotton pulp cellulose is 420, place into an oven and heat for 1.5 hours at a temperature of 210°C, take out and set aside. Using water as a solvent, prepare an aqueous cellulose solvent including sodium hydroxide at a mass concentration of 11% and zinc oxide with a mass concentration of 2.5%. Weigh the heated and activated cellulose and add the cellulose into the prepared cellulose solvent, so that a mass concentration of the cellulose is 6.5%, stir well to submerge all the cellulose below the liquid surface. Then put the mixture in a cold storage with a temperature of -20°C, freeze for 3 hours, take out and stand under room temperature for unfreezing, where the room temperature is 22°C. When the temperature of the mixture is raised to 22°C, stir by a glass rod to obtain a transparent cellulose solution. Take out a small amount of the cellulose solution, place onto a fiber projectorCYG-055DI, observe and photograph by magnifying 100 times. A microscopic photo of the cellulose solution is shown in Fig.5. The cellulose is dissolved completely and a diameter of the colloidal particle is less than 5 µm. Store the solution under the room temperature of 22°C for 120 hours. At different time points, liquid from an upper level of the solution is taken and dried to weigh a solid content of the cellulose. A comparison to the solid content of the cellulose solution at the initial time point of 0 hour is shown in Fig. 7. After 120 hours, the settled content is 5.7wt% and a weight ratio of the non-settled content is 94.3wt%.

### Embodiment 6

Weigh a certain mass of cotton pulp cellulose, where a degree of polymerization of the cotton pulp is 500, place into an oven and heat for 1 hour under a temperature of 200°C, take out and set aside. Using water as a solvent, prepare an aqueous cellulose solvent including sodium hydroxide with a mass concentration of 8% and zinc oxide with a mass concentration of 0.7%. Weigh the heated and activated cellulose and add the cellulose into the prepared cellulose solvent, so that a mass concentration of the cellulose is 7.5%, stir well to submerge all the cellulose below the liquid surface. Then put the mixture in a cold storage with a temperature of -28°C, freeze for 10 hours, take out and stand at room temperature for unfreezing, wherein the room temperature maybe 21°C. When the temperature of the mixture is raised to 21°C, stir by a glass rod to obtain a transparent cellulose solution. Take out a small amount of the cellulose solution, place to a fiber projectorCYG-055DI, observe and photograph by magnifying 100 times. A microscopic photo of the cellulose solution is shown in Fig.6. The cellulose is dissolved completely and a diameter of the colloidal particle is less than 5 µm. Store the solution under the room temperature of 21°C for 120 hours. At different time points, liquid from an upper level of the solution is taken and dried to weigh a solid content of the cellulose. A comparison to the solid content of the cellulose solution at the initial time point of 0 hour is shown in Fig. 7. After 100 hours, the settled content is 5.6wt% and a weight ratio of the non-settled content is 94.4wt%.

## Claims

1. A method of dissolving cellulose, comprising:
heating and activating the cellulose in a heating apparatus; and
then dissolving with a solvent,
wherein a heating temperature of the heating and activating the cellulose is130-270°C, and a heating time is 0.1-100 hours.

2. The method of dissolving cellulose of claim 1, wherein the solvent is an aqueous solution including 6wt%-12wt% of sodium hydroxide and 0.1wt%-6wt% of zinc oxide.

3. The method of dissolving cellulose of claim 1, wherein the solvent is an aqueous solution including 7.0wt%~9.0wt% of sodium hydroxide and 0.5wt%~2.0wt% of zinc oxide.

4. The method of dissolving cellulose of any of claims 1 - 3, wherein the dissolving the cellulose comprising:
1) heating and activating the cellulose, wherein a degree of polymerization of the cellulose is DP=300~700, dispersing the heated and activated cellulose in the solvent, and freezing under a freezing temperature of -10~ -30°C for a freezing time of 0.1~50 hours; and
2) unfreezeing the cellulose frozen by step 1) at a temperature of no more than 32°C, and standing or stirringby a machine so as to obtain a cellulose solution with a concentration of 3wt%-12wt%.

5. The method of dissolving cellulose of claim 4, wherein in step 1), the freezing temperature is -12~-18°C and the freezing time is 0.1~50 hours.

6. The method of dissolving cellulose of claim 4, wherein in step 1), the degree of polymerization (DP) of the cellulose is 350~550.

7. The method of dissolving cellulose of claim 4, wherein in step 2), the unfreezing temperature is 10~22°C.

8. The method of dissolving cellulose of claim 4, wherein in step 2),the concentration of the cellulose solution obtained by dissolving is 5.0wt%~8.5wt%.

## Patentansprüche

1. Verfahren zum Auflösen von Cellulose, umfassend:
Erwärmen und Aktivieren der Cellulose in einer Heizvorrichtung; und
dann Auflösen mit einem Lösungsmittel,
wobei eine Erwärmungstemperatur zum Erwärmen und Aktivieren der Cellulose 130-270°C beträgt und eine Erwärmungsdauer 0,1-100 Stunden beträgt.

2. Verfahren zum Auflösen von Cellulose nach Anspruch 1, wobei das Lösungsmittel eine wässrige Lösung ist, welche 6 Gew.-% - 12 Gew.-% Natriumhydroxid und 0,1 Gew.-% - 6 Gew.-% Zinkoxid umfasst.

3. Verfahren zum Auflösen von Cellulose nach Anspruch 1, wobei das Lösungsmittel eine wässrige Lösung ist, welche 7,0 Gew.-% - 9,0 Gew.-% Natriumhydroxid und 0,5 Gew.-% - 2,0 Gew.-% Zinkoxid umfasst.

4. Verfahren zum Auflöse von Cellulose nach einem der Ansprüche 1 - 3, wobei das Auflösen der Cellulose umfasst:
1) Erwärmen und Aktivieren der Cellulose, wobei ein Polymerisationsgrad der Cellulose DP=300~700 beträgt, Dispergieren der erwärmten und aktivierten Cellulose in dem Lösungsmittel und Einfrieren unter einer Gefriertemperatur von -10 ~ -30°C über eine Gefrierdauer von 0,1~50 Stunden; und
2) Auftauen der durch Schritt 1) gefrorenen Cellulose bei einer Temperatur von nicht mehr als 32°C und Stehenlassen oder Rühren durch eine Maschine, um eine Celluloselösung mit einer Konzentration von 3 Gew.-% - 12 Gew.-% zu erhalten.

5. Verfahren zum Auflösen von Cellulose nach Anspruch 4, wobei in Schritt 1) die Gefriertemperatur -12 ~ -18°C beträgt und die Gefrierdauer 0,1 ~50 Stunden beträgt.

6. Verfahren zum Auflösen von Cellulose nach Anspruch 4, wobei in Schritt 1) der Polymerisationsgrad (DP) der Cellulose 350~550 beträgt.

7. Verfahren zum Auflösen von Cellulose nach Anspruch 4, wobei in Schritt 2) die Auftautemperatur 10 ~ 22°C beträgt.

8. Verfahren zum Auflösen von Cellulose nach Anspruch 4, wobei in Schritt 2) die Konzentration der durch Auflösen erhaltenen Celluloselösung 5,0 Gew.-% ~ 8,5 Gew.-% beträgt.

## Revendications

1. Procédé de dissolution de cellulose, comprenant les étapes consistant à :
chauffer et activer la cellulose dans un appareil de chauffage ; et
dissoudre ensuite avec un solvant,
dans lequel une température de chauffage du chauffage et de l'activation de la cellulose est comprise entre 130 et 270° C, et une durée de chauffage est comprise entre 0,1 et 100 heures.

2. Procédé de dissolution de cellulose selon la revendication 1, dans lequel le solvant est une solution aqueuse comprenant 6 % en poids à 12 % en poids d'hydroxyde de sodium et 0,1 % en poids à 6 % en poids d'oxyde de zinc.

3. Procédé de dissolution de cellulose selon la revendication 1, dans lequel le solvant est une solution aqueuse comprenant 7,0 % en poids à 9,0 % en poids d'hydroxyde de sodium et 0,5 % en poids à 2,0 % en poids d'oxyde de zinc.

4. Procédé de dissolution de cellulose selon l'une quelconque des revendications 1 à 3, dans lequel la dissolution de la cellulose comprend les étapes consistant à :
1) chauffer et activer la cellulose, le degré de polymérisation de la cellulose étant DP = 300 à 700, disperser la cellulose chauffée et activée dans le solvant, et congeler à une température de congélation de -10 à -30° C pendant un temps de congélation de 0,1 à 50 heures ; et
2) décongeler la cellulose congelée à l'étape 1) à une température qui n'est pas supérieure à 32° C, et laisser reposer ou remuer à l'aide d'une machine de manière à obtenir une solution de cellulose ayant une concentration de 3 à 12 % en poids.

5. Procédé de dissolution de cellulose selon la revendication 4, dans lequel à l'étape 1), la température de congélation est comprise entre -12 et -18° C et le temps de congélation est compris entre 0,1 et 50 heures.

6. Procédé de dissolution de cellulose selon la revendication 4, dans lequel à l'étape 1), le degré de polymérisation (DP) de la cellulose est compris entre 350 et 550.

7. Procédé de dissolution de cellulose selon la revendication 4, dans lequel à l'étape 2), la température de décongélation est comprise entre 10 et 22° C.

8. Procédé de dissolution de cellulose selon la revendication 4, dans lequel à l'étape 2), la concentration de la solution de cellulose obtenue par dissolution est comprise entre 5,0 % en poids et 8,5 % en poids.
